# EUROPÄISCHE PATENTSCHRIFT

(11) **EP 1 042 052 B1**
(45) Veröffentlichungstag und Bekanntmachung des Hinweises auf die Patenterteilung: **20.03.2002**
(21) Anmeldenummer: 98966533.6
(22) Anmeldetag: 11.12.1998
(51) Int. Cl.: B01D 53/94, F01N 3/20, B01D 53/86

(54) **VERFAHREN UND VORRICHTUNG ZUR REDUZIERUNG DER STICKOXIDE IM ABGAS EINER VERBRENNUNGSANLAGE**
METHOD AND DEVICE FOR REDUCING THE NITROGEN OXIDES PRESENT IN THE WASTE GAS OF A COMBUSTION UNIT
PROCEDE ET DISPOSITIF POUR REDUIRE LES OXYDES D'AZOTE DANS LES GAZ BRULES D'UNE UNITE DE COMBUSTION

(30) Priorität: 17.12.1997 DE 19756251
(43) Veröffentlichungstag der Anmeldung: 11.10.2000
(73) Patentinhaber: SIEMENS AKTIENGESELLSCHAFT, 80333 München (DE)
(72) Erfinder: WISSLER, Gerhard, D-93104 Sünching (DE); PAJONK, Günther, D-96199 Zapfendorf (DE); WEIGL, Manfred, D-93161 Viehhausen (DE); HOFMANN, Lothar, D-96264 Altenkunstadt (DE)
(86) Internationale Anmeldenummer: DE9803643
(87) Internationale Veröffentlichungsnummer: WO9930810

(56) Entgegenhaltungen:
- EP-A- 0 652 500
- EP-A- 0 881 367
- DE-A- 4 237 705
- DE-A- 4 435 103
- DE-C- 4 217 552
- DE-C- 4 334 071

## Beschreibung

Die Erfindung betrifft ein Verfahren und eine Einrichtung zur katalytischen Umsetzung von Stickoxiden im Abgas einer Verbrennungsanlage, insbesondere eines Dieselmotors.

Bei der Verbrennung von fossilem Brennstoff wie Erdöl oder Kohle in einer Verbrennungsanlage, insbesondere von Dieselkraftstoff in einem Dieselmotor, können in nicht unerheblichem Umfang Schadstoffe entstehen, die über das Abgas an die Umwelt abgegeben werden und dort Schäden anrichten können. Insbesondere stellen dabei die Stickoxide ein nicht unerhebliches Problem dar, da diese als Mitverursacher für den sauren Regen und das Waldsterben diskutiert werden.

Um den Eintrag von Stickoxiden in die Umwelt zu vermindern, ist der Einsatz von in der Abgasleitung einer Verbrennungsanlage angeordneten Katalysatoren zur katalytischen Umwandlung der im Abgas enthaltene Stickoxide in unbedenkliche Stoffe bekannt.

Für einen mit Luftüberschuß betriebenen Verbrennungsmotor, wie z.B. einem Dieselmotor, ist es bekannt, die Stickoxide nach dem Verfahren der selektiven, katalytischen Reduktion (SCR-Verfahren) aus dem Abgas zu entfernen. Dabei wird in das Abgas vor dem Durchströmen eines sogenannten SCR- oder DeNOx-Katalysators ein Reduktionsmittel eingebracht, das die im Abgas enthaltenen Stickoxide in Anwesenheit von Sauerstoff am Katalysator zu unschädlichem Stickstoff und Wasser umsetzt. Als Reduktionsmittel wird dabei in der Regel Ammoniak verwendet. Zur Zuführung des Reduktionsmittels ist es auch bekannt, eine Reduktionsmittellösung in das Abgas einzubringen, aus welcher das eigentliche Reduktionsmittel freigesetzt wird. Im Falle von Ammoniak ist eine solche Reduktionsmittellösung beispielsweise eine wäßrige Harnstofflösung oder Ammoniakwasser. Siehe hierzu die Siemens-Firmenschrift: SINOx, Stickoxidminderung für stationäre Dieselmotoren, 1997, Best.-Nr.: A96001-U91-A232.

Bei der Stickoxidminderung nach dem SCR-Verfahren muß stets eine an die aktuelle Stickoxidemission angepaßte Reduktionsmittelmenge in das Abgas eingebracht werden, um eine hohe Umsatzrate der Stickoxide am Katalysator zu erzielen, ohne daß hierbei ein nennenswerter Schlupf an Reduktionsmittel auftritt, was im Falle von Ammoniak schädlich für die Umwelt wäre.

Insbesondere bei instationären Verbrennungsanlagen, wie z.B. zur Traktion von LKW oder PKW eingesetzten Dieselmotoren, welche mit häufigen Lastwechseln betrieben werden, gestaltet sich die Ermittlung der einzubringenden Menge an Reduktionsmittel äußerst schwierig. Da bislang schnelle Sensoren zur direkten Ermittlung der Stickoxidkonzentration im Abgas nicht bekannt sind, muß die Stickoxidkonzentration aus den Betriebszustand der Verbrennungsanlage charakterisierenden Parametern, wie z.B. Drehzahl, Drehmoment oder Regelstangenweg, ermittelt werden. Hierzu wird die Konzentration der Stickoxide jeweils bei definierten Betriebszuständen der Verbrennungsanlage in einem Prüfstand ermittelt und in einem Kennfeld in einer Kontrolleinheit abgelegt. Aus diesem Kennfeld wird dann während des Betriebs aus den den Betriebszustand der Verbrennungsanlage charakterisierenden Parametern die Konzentration der Stickoxide abgelesen und eine entsprechende Menge an Reduktionsmittel oder Reduktionsmittellösung zudosiert. Dabei muß jedoch gerade bei stark schwankenden Abgastemperaturen oder bei einer Alterung der Verbrennungsanlage oder des Katalysators infolge der starren Kennlinie stets ein gewisser Sicherheitsabstand zur eigentlich erforderlichen Menge an Reduktionsmittel eingehalten werden, um einen Schlupf des Reduktionsmittels sicher zu vermeiden. Es wird also stets etwas weniger Reduktionsmittel zugeführt, als zur Umsetzung der Stickoxide notwendig wäre. Zur Vermeidung des Schlupfes wird unterhalb der theoretisch möglichen Umsatzrate gearbeitet.

Zu einer genaueren Dosierung und um den Sicherheitsabstand zu verkleinern, ist es aus der DE 19536571 A1 auch bekannt, bei der Ermittlung der zuzudosierenden Menge an Reduktionsmittel zusätzlich Parameter des Abgases wie Temperatur, Druck oder chemische Zusammensetzung, sowie den Katalysator charakterisierende Parameter wie Speicherkapazität, z.B. für Reduktionsmittel, Temperatur, katalytische Aktivität oder Aufbau zu berücksichtigen. Insbesondere die Berücksichtigung der Speicherkapazität des Katalysators erlaubt eine weitere Verringerung des Sicherheitsabstandes und damit eine Erhöhung der Umsatzrate, da nun auch das vom Katalysator bei niedrigen Temperaturen durch Adsorption gespeicherte und bei hohen Temperaturen durch Desorption an das Abgas abgegebene Reduktionsmittel miteinbezogen wird.

Die Erfindung hat sich die Aufgabe gestellt, ein Verfahren und eine Vorrichtung zur katalytischen Umsetzung von im Abgas einer Verbrennungsanlage enthaltenen Stickoxiden anzugeben, bei dem ein Reduktionsmittelschlupf sicher vermieden und gleichzeitig gegenüber dem Stand der Technik die Umsatzrate der Stickoxide erhöht wird.

Zur Lösung der Aufgabe bezüglich des Verfahrens wird angegeben ein Verfahren zur katalytischen Reduzierung von Stickoxiden im Abgas einer Verbrennungsanlage, insbesondere eines Dieselmotors, wobei abhängig von den Betriebszustand der Verbrennungsanlage, das Abgas und/oder einen Katalysator charakterisierenden Parametern eine zu dosierende Menge einer Reduktionsmittellösung bestimmt und in Strömungsrichtung des Abgases vor dem Katalysator in das Abgas eingebracht wird, wobei das Reduktionsmittel aus der Reduktionsmittellösung freigesetzt und mit den Stickoxiden am Katalysator umgesetzt wird, und wobei erfindungsgemäß die Konzentration der Reduktionsmittellösung diskontinuierlich bei und/oder vor Einbringung der Reduktionsmittellösung in das Abgas bestimmt und die zu dosierende Menge an die ermittelte Konzentration angepaßt wird.

Die Erfindung geht von der Beobachtung aus, daß auch bei einer mit Berücksichtigung der Speicherkapazität des Katalysators und der Abgaszusammensetzung berechneten Menge an zuzudosierendem Reduktionsmittel unter gewissen Betriebsbedingungen ein Reduktionsmittelschlupf feststellbar ist. Der Reduktionsmittellschlupf tritt vermehrt dann auf, wenn das eigentliche Reduktionsmittel von einer Reduktionsmittellösung freigesetzt wird.

Die Erfindung geht dann von der Überlegung aus, daß der beobachtete Reduktionsmittelschlupf eine Folge unterschiedlicher Konzentrationen der verwendeten Reduktionsmittellösungen ist. Da bei herkömmlichen Dosierverfahren von einer festen Konzentration ausgegangen wird, führen verschiedene, herstellungsbedingte oder durch Verdunstungseffekte entstandene Konzentrationen zu nicht unerheblichen Abweichungen der tatsächlich eingebrachten Menge an Reduktionsmittel gegenüber der vorgesehenen. Diese Dosierungsfehler beim Einbringen der Reduktionsmittellösung lassen sich jedoch dadurch vermeiden, daß die Konzentration der Reduktionsmittellösung zur Bestimmung der tatsächlich in das Abgas eingedüsten Reduktionsmittelmenge herangezogen wird. Ist die tatsächliche Konzentration der Reduktionsmittellösung bekannt, so ist damit die Reduktionsmittelmenge bzw. die Menge der das Reduktionsmittel freisetzenden Substanz pro Volumeneinheit der Reduktionsmittellösung bekannt. Damit läßt sich die aus einer vorgegebenen, d.h. angenommenen Konzentration der Reduktionsmittellösung errechnete Zugabemenge an die tatsächliche Konzentration anpassen. Die Anpassung an die tatsächliche Konzentration kann z.B. durch einen Korrekturfaktor erfolgen, so daß bei einer volumetrischen Zudosierung das zudosierte Volumen der Reduktionsmittellösung bei einer gegenüber der angenommenen Konzentration verringerten tatsächlichen Konzentration vergrößert oder bei einer gegenüber der angenommenen Konzentration vergrößerten tatsächlichen Konzentration verringert wird. Es ist aber ebensogut vorstellbar, den beispielsweise in einer Kontrolleinheit abgelegten Wert der angenommenen Konzentration der Reduktionsmittellösung durch den tatsächlichen Wert zu ersetzen und diesen dann zur Berechnung der zu dosierenden Menge der Reduktionsmittellösung heranzuziehen.

Die Erfindung erlaubt gegenüber dem Stand der Technik eine weitere Verringerung des Sicherheitsabstandes zwischen der tatsächlich eingebrachten und der theoretisch optimalen Menge an Reduktionsmittel, ohne daß ein Schlupf des Reduktionsmittels auftritt. Dadurch kann eine hohe Umsatzrate der Stickoxide gerade auch bei einer instationären Verbrennungsanlage, insbesondere bei einem Dieselmotor, erzielt werden.

Da die Reduktionsmittellösung in der Regel in einem abgeschlossenen Behälter aufbewahrt wird, ist keine rasche Änderung der Konzentration der Reduktionsmittellösung zu erwarten. Es genügt daher, die Konzentration der Reduktionsmittellösung diskontinuierlich, z.B. periodisch mit vorgegebenen Zeitabständen, zu bestimmen.

Vorteilhafterweise erfolgt die diskontinuierliche Bestimmung der Konzentration der Reduktionsmittellösung jeweils bei der Befüllung eines Vorratsbehälters mit Reduktionsmittellösung. So wird es möglich, herstellungsbedingte Konzentrationsunterschiede beim Befüllen oder auch das Mischen mit eventuell noch im Reduktionsmitteltank befindlicher, alter Reduktionsmittellösung anderer Konzentration bei der Dosierung zu berücksichtigen. Dies ist insbesondere bei nichtstationären Verbrennungsanlagen, wie z.B. bei einem zur Traktion verwendeten Dieselmotor, von Vorteil, wenn in regelmäßigen Abständen an verschiedenen Orten Reduktionsmittellösung unterschiedlicher Herkunft aufgefüllt werden muß.

Die Dosiergenauigkeit läßt sich noch weiter erhöhen, wenn die momentane Konzentration der Reduktionsmittellösung bei und/- oder vor Einbringen der Reduktionsmittellösung in das Abgas bestimmt wird. Dadurch lassen sich auch die Konzentration beeinflussende Faktoren wie beispielsweise Dichteschwankungen bei Temperaturänderungen, Verdunstung und Verunreinigung der Reduktionsmittellösung bei der Dosierung der Reduktionsmittellösung berücksichtigen und ausgleichen.

Bevorzugt wird die Konzentration der Reduktionsmittellösung dadurch bestimmt, daß die Leitfähigkeit der Reduktionsmittellösung gemessen wird. Dabei muß natürlich vorausgesetzt werden, daß die Reduktionsmittellösung elektrisch leitend ist, wie das z.B. bei einer wäßrigen Harnstofflösung der Fall ist. Es ist aber auch möglich, die Konzentration der Reduktionsmittellösung über die Messung ihres pH-Wertes zu bestimmen. Dies ist z.B. bei der Verwendung von Ammoniakwasser als Reduktionsmittellösung möglich.

In zweckmäßiger Ausgestaltung der Erfindung wird als Reduktionsmittellösung eine wässrige Harnstofflösung eingebracht, aus welcher Ammoniak freigesetzt wird. Das freigesetzte Ammoniak wird an einem DeNOₓ-Katalysator auf Basis von TiO₂ mit Beimengungen an V₂O₃, MoO₃ und/oder WO₃ mit den Stickoxiden umgesetzt.

Die Aufgabe bezüglich der Vorrichtung wird gelöst durch eine Vorrichtung zur katalytischen Reduzierung von Stickoxiden im Abgas einer Verbrennungsanlage, insbesondere eines Dieselmotors, mit einer Abgasleitung, mit einem Katalysator, mit einer in Strömungsrichtung des Abgases vor dem Katalysator angeordneten Dosiereinrichtung zum Einbringen einer definierten Menge einer Reduktionsmittellösung in das Abgas und einer mit der Dosiereinrichtung verbundenen Kontrolleinheit zur Eingabe und zur Bestimmung der zu dosierenden Menge der Reduktionsmittellösung aus verfügbaren, den Betriebszustand der Verbrennungsanlage, das Abgas und/oder den Katalysator charakterisierenden Parametern, wobei erfindungsgemäß ein Sensor zur Messung der Konzentration der Reduktionsmittellösung vorgesehen ist, welcher mit der Kontrolleinheit verbunden ist, die zusätzlich für eine Anpassung der zu dosierenden Menge an die durch den Sensor verfügbare Konzentration ausgebildet ist.

Die Kontrolleinheit ermittelt aus den verfügbaren, den Betriebszustand der Verbrennungsanlage, das Abgas und/oder den Katalysator kennzeichnenden Parametern über ein implementiertes Kennfeld zunächst den zugeordneten Stickoxidanteil des Abgases und errechnet daraus die für die Umsetzung der im Abgas enthaltenen Stickoxide notwendige Reduktionsmittelmenge. Ein geeigneter Sensor ermittelt weiter die Konzentration der Reduktionsmittellösung und gibt diese an die Kontrolleinheit weiter. Die Kontrolleinheit paßt dann die in das Abgas einzubringende Menge der Reduktionsmittellösung, welche die für den momentanen Stickoxidgehalt des Abgases notwendige Reduktionsmittelmenge enthält, an die vom Sensor gemessene Konzentration an.

Arbeitet die Kontrolleinheit mit einem fest vorgegebenen Wert für die Konzentration der Reduktionsmittellösung (z.B. gemäß der Herstellerangabe), so wird aus der momentanen Konzentration ein entsprechender Korrekturfaktor bestimmt. Auch ist es möglich, den in der Kontrolleinheit abgelegten Wert für die Konzentration der Reduktionsmittellösung durch den tatsächlichen Wert zu ersetzen und diesen direkt zur Berechnung der zuzudosierenden Menge der Reduktionsmittellösung heranzuziehen. Schließlich veranlaßt die Kontrolleinheit über die Dosiereinrichtung das Einbringen der angepaßten Menge Reduktionsmittellösung in das Abgas.

Vorteilhafterweise ist der Sensor zur Bestimmung der Konzentration der Reduktionsmittellösung als Leitfähigkeitssensor ausgebildet. Bevorzugt umfaßt der Leitfähigkeitssensor dazu zwei an eine Spannungsquelle anschließbare und in die Reduktionsmittellösung eintauchbare Elektroden. Wenn die Elektroden mit einer bekannten Spannung beaufschlägt werden, fließt in der Reduktionsmittello" sung ein Strom, über den auf den elektrischen Widerstand der Reduktionsmittellösung und damit auf die Konzentration des Reduktionsmittels in der Reduktionsmittellösung geschlossen werden kann. Die hohe Zuverlässigkeit des Leitfähigkeitssensors ermöglicht eine gleichbleibend gute Erfassung der Konzentration über die gesamte Betriebsdauer der Verbrennungsanlage.

Im Falle einer wässrigen Harnstofflösung besteht der Sensor bevorzugt aus einem Harnstoff-resistenten Material, wie z.B. Edelstahl.

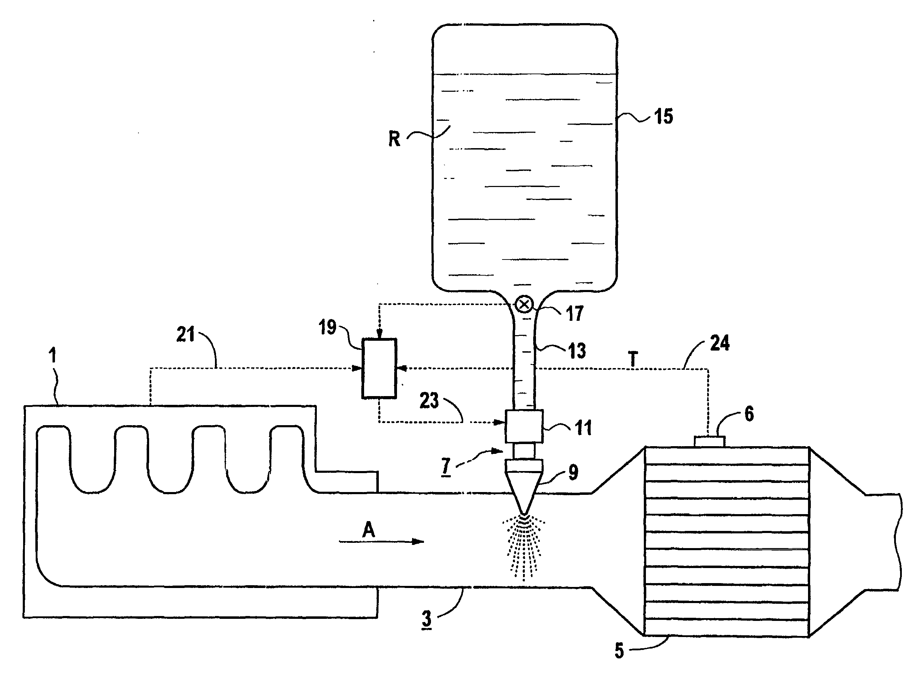

Nachfolgend wird ein Ausführungsbeispiel der Erfindung anhand einer Zeichnung näher erläutert. Die Zeichnung zeigt dabei eine schematische Darstellung eines Dieselmotors, mit einer an die Abgasleitung angeschlossenen Vorrichtung zur katalytischen Reduzierung der im Abgas enthaltenen Stickoxide nach dem SCR-Verfahren, wobei die Konzentration der in das Abgas einzubringenden Reduktionsmittellösung berücksichtigt wird.

In der Zeichnung ist als eine Verbrennungsanlage 1 ein Dieselmotor mit einer Abgasleitung 3 und einem Katalysator 5 gezeigt. Der Katalysator 5 ist als ein wabenförmiger DeNOx-Katalysator zur Reduzierung von Stickoxiden nach dem SCR-Verfahren ausgeführt und umfaßt als Hauptbestandteil TiO₂ sowie Beimengungen an WO₃, V₂O₅ und MoO₃. Dem Katalysator (5) ist ein Temperaturfühler 6 zur Bestimmung der Temperatur T des Katalysators 5 zugeordnet. An der Abgasleitung 3 ist in Strömungsrichtung eines Abgases A vor dem Katalysator 5 eine Dosiereinrichtung 7 für eine Reduktionsmittellösung R angeordnet, die eine Einspritzdüse 9 und ein Ventil 11 umfaßt. Die Dosiereinrichtung 7 ist über eine Zuleitung 13 mit einem Vorratsbehälter 15 verbunden. Als Reduktionsmittellösung R kommt eine wäßrige Harnstofflösung zum Einsatz, die bei Einbringung in das heiße Abgas A des Dieselmotors Ammoniak als Reduktionsmittel freisetzt.

Am tiefsten Punkt des Vorratsbehälters 15, im Bereich der Mündung der Zuleitung 13, befindet sich ein Sensor 17 zur Bestimmung der Konzentration der Reduktionsmittellösung R. Der Sensor 17 ist als ein Leitfähigkeitssensor ausgebildet, welcher zwei nicht näher dargestellte Elektroden umfaßt, die an eine Spannungsquelle angeschlossen sind und in die Reduktionsmittellösung eintauchen. Durch eine an die Elektroden angelegte Spannung, wird über den dann fließenden Strom auf den elektrischen Widerstand und damit auf die Konzentration der wäßrigen Harnstofflösung geschlossen.

Der Sensor 17 ist mit einer Kontrolleinheit 19 verbunden, welche zusätzlich über eine Datenleitung 21 als den Betriebszustand des Dieselmotors kennzeichnende Parameter Drehmoment, Drehzahl, Betriebstemperatur sowie Kraftstoffverbrauch erfaßt. Die Kontrolleinheit 19 ist weiterhin über eine Steuerleitung 23 mit dem Ventil 11 der Dosiereinrichtung 7 verbunden. Auch wird der Kontrolleinheit über eine Datenleitung 24 die Temperatur T des Katalysators 5 zur Verfügung gestellt.

Die Kontrolleinheit 19 ermittelt aus den ihr über die Datenleitung 21 zur Verfügung stehenden, den Betriebszustand des Dieselmotors kennzeichnenden Parametern die Stickoxidemission des Dieselmotors. Dazu wird aus einem in der Kontrolleinheit 19 abgelegten Kennfeld die zu den Werten der entsprechenden Parameter gehörige Stickoxidemission ausgelesen. Die Kontrolleinheit 19 berücksichtigt ferner über die Temperatur des Katalysators 5 den Katalysatorfüllstand an Reduktionsmittel und errechnet schließlich die dem Abgas A zuzuführende Menge an Reduktionsmittel, insbesondere aus einer vorgegebenen Konzentration des Reduktionsmittels in der Reduktionsmittellösung (R)) die zuzuführende Menge der Reduktionsmittellösung (R) .

Vor Eindüsung erfaßt die Kontrolleinheit 19 über den Sensor 17 die aktuelle Konzentration der Reduktionsmittellösung R im Vorratsbehälter 15 und bestimmt dann mittels eines Korrekturfaktors eine entsprechend der aktuellen Konzentration angepaßte Menge an Reduktionsmittellösung. Über die Steuerleitung 23 wird zuletzt die Dosiereinrichtung 7 veranlaßt, die angepaßte Menge der Reduktionsmittellösung R über das Ventil 11 und die Einspritzdüse 9 in das Abgas A in bekannter Weise einzudüsen.

## Patentansprüche

1. Verfahren zur katalytischen Reduzierung von Stickoxiden im Abgas (A) einer Verbrennungsanlage (1), insbesondere eines Dieselmotors, wobei abhängig von den Betriebszustand der Verbrennungsanlage (1), das Abgas (A) und/oder einen Katalysator (5) charakterisierenden Parametern eine zu dosierende Menge einer Reduktionsmittellösung (R) bestimmt und in Strömungsrichtung des Abgases (A) vor dem Katalysator (5) in das Abgas (A) eingebracht wird, wobei ein Reduktionsmittel aus der Reduktionsmittellösung (R) freigesetzt und mit den Stickoxiden am Katalysator (5) umgesetzt wird,
**dadurch gekennzeichnet, daß** die Konzentration der Reduktionsmittellösung (R) diskontinuierlich bei und/oder vor Einbringung der Reduktionsmittellösung in das Abgas bestimmt und die zu dosierende Menge an die ermittelte Konzentration angepaßt wird.

2. Verfahren nach Anspruch 1,
**dadurch gekennzeichnet, daß** die Konzentration der Reduktionsmittellösung (R) diskontinuierlich jeweils bei der Befüllung eines Vorratsbehälters (15) mit der Reduktionsmittellösung (R) bestimmt wird.

3. Verfahren nach Anspruch 1 oder 2,
**dadurch gekennzeichnet, daß** die Konzentration der Reduktionsmittellösung (R) durch Messen der Leitfähigkeit der Reduktionsmittellösung (R) bestimmt wird.

4. Verfahren nach einem der Ansprüche 1 bis 3,
**dadurch gekennzeichnet, daß** als Reduktionsmittellösung (R) eine wässrige Harnstofflösung eingebracht wird und der Katalysator (5) ein DeNOx-Katalysator ist.

5. Vorrichtung zur katalytischen Reduzierung von Stickoxiden im Abgas (A) einer Verbrennungsanlage (1), insbesondere eines Dieselmotors, mit einer Abgasleitung (3), mit einem Katalysator (5), mit einer in Strömungsrichtung des Abgases (A) vor dem Katalysator (5) angeordneten Dosiereinrichtung (7) zum Einbringen einer definierten Menge einer Reduktionsmittellösung (R) in das Abgas (A) und einer mit der Dosiereinrichtung (7) verbundenen Kontrolleinheit {19} zur Bestimmung der zu dosierenden Menge der Reduktionsmittellösung (R) aus verfügbaren, den Betriebszustand der Verbrennungsanlage (1), das Abgas (A) und/oder den Katalysator (5) :charakterisierenden Parametern,
**dadurch gekennzeichnet, daß** ein Sensor (17) zur Messung der Konzentration der Reduktionsmitteilösung (R) vorgesehen ist, welcher mit der Kontrolleinheit (19) verbunden ist, und daß die Kontrolleinheit (19) zusätzlich für eine Anpassung der zu dosierenden Menge der Reduktionsmittellösung (R) an die durch den Sensor (17) verfügbare Konzentration ausgebildet ist.

6. Vorrichtung nach Anspruch 5,
**dadurch gekennzeichnet, daß** der Sensor (17) ein Leitfähigkeitssensor ist.

7. Vorrichtung nach Anspruch 6,
**dadurch gekennzeichnet, daß** der Leitfähigkeitssensor zwei an eine Spannungsquelle anschließbare und in die Reduktionsmittellösung (R) eintauchbare Elektroden umfaßt.

8. Vorrichtung nach einem der Ansprüche 5 bis 8,
**dadurch gekennzeichnet, daß** die Reduktionsmittellösung (R) eine wässrige Harnstofflösung und der Katalysator (5) ein DeNOx-Katalysator ist.

## Claims

1. Method for catalytically reducing nitrogen oxides in the exhaust gas (A) of a combustion system (1), in particular of a diesel engine, in which method an amount of a reducing agent solution (R) to be metered is determined in dependence on parameters characterizing the operating state of the combustion system (1), the exhaust gas (A) and/or a catalyst (5) and is introduced into the exhaust gas (A) upstream of the catalyst (5) in the direction of flow of the exhaust gas (A), a reducing agent being released from the reducing agent solution (R) and converted with the nitrogen oxides at the catalyst (5), **characterized in that** the concentration of the reducing agent solution (R) is determined discontinously during and/or before the reducing agent solution is introduced into the exhaust gas and the amount to be metered is adapted to the concentration determined.

2. Method according to Claim 1, **characterized in that** the concentration of the reducing agent solution (R) is determined discontinuously each time a supply container (15) is filled with the reducing agent solution (R).

3. Method according to Claim 1 or 2, **characterized in that** the concentration of the reducing agent solution (R) is determined by measuring the conductivity of the reducing agent solution (R).

4. Method according to one of Claims 1 to 3, **characterized in that** an aqueous urea solution is introduced as the reducing agent solution (R) and the catalyst (5) is a DeNOx catalyst.

5. Device for catalytically reducing nitrogen oxides in the exhaust gas (A) of a combustion system (1), in particular of a diesel engine, with an exhaust line (3), with a catalyst (5), with a metering device (7), arranged upstream of the catalyst (5) in the direction of flow of the exhaust gas (A), for introducing a defined amount of a reducing agent solution (R) into the exhaust gas (A), and a monitoring unit (19), connected to the metering device (7), for determining the amount of reducing agent solution (R) to be metered from available parameters characterizing the operating state of the combustion system (1), the exhaust gas (A) and/or the catalyst (5), **characterized in that** a sensor (17) is provided for measuring the concentration of the reducing agent solution (R), which sensor is connected to the monitoring unit (19), and **in that** the monitoring unit (19) is additionally designed for an adaptation of the amount of reducing agent solution (R) to be metered to the concentration available through the sensor (17).

6. Device according to Claim 5, **characterized in that** the sensor (17) is a conductivity sensor.

7. Device according to Claim 6, **characterized in that** the conductivity sensor comprises two electrodes which can be connected to a voltage source and can be dipped into the reducing agent solution (R).

8. Device according to one of Claims 5 to 8, **characterized in that** the reducing agent solution (R) is an aqueous urea solution and the catalyst (5) is a DeNOx catalyst.

## Revendications

1. Procédé de réduction catalytique d'oxydes d'azote dans les gaz (A) brûlés d'une unité (1) de combustion, notamment d'un moteur diesel, dans lequel on détermine, en fonction de paramètres caractérisant l'état de fonctionnement de l'unité (1) de combustion, de paramètres caractérisant les gaz (A) brûlés et/ou un catalyseur (5), une quantité à ajouter de manière dosée d'une solution (R) d'agent réducteur et on introduit dans le gaz brûlé en amont, considéré dans la direction d'écoulement des gaz (A) brûlés, du catalyseur (5), un agent réducteur se dégageant de la solution (R) d'agent réducteur et réagissant avec les oxydes d'azote sur le catalyseur (5),
**caractérisé en ce que** l'on détermine la concentration de la solution (R) d'agent réducteur en discontinu lors et/ou avant l'introduction de la solution d'agent réducteur dans les gaz brûlés et l'on adapte la quantité à ajouter de manière dosée à la concentration déterminée.

2. Procédé suivant la revendication 1, **caractérisé en ce que** l'on détermine la concentration de la solution (R) d'agent réducteur en discontinu chaque fois que l'on emplit un réservoir (15) de la solution (R) d'agent réducteur.

3. Procédé suivant la revendication 1 ou 2, **caractérisé en ce que** l'on détermine la concentration de la solution (R) d'agent réducteur en mesurant la conductivité de la solution (R) d'agent réducteur.

4. Procédé suivant l'une des revendications 1 à 3, **caractérisé en ce que** l'on introduit comme solution (R) d'agent réducteur une solution aqueuse d'urée et le catalyseur (5) est un catalyseur DeNOx.

5. Dispositif de réduction catalytique d'oxydes d'azote contenus dans les gaz (A) brûlés d'une unité (1) de combustion, notamment d'un moteur diesel, comprenant un conduit (3) pour les gaz brûlés, un catalyseur (5), un dispositif (7) d'addition de manière dosée, qui est monté, considéré dans la direction d'écoulement des gaz (A) brûlés, en amont du catalyseur (5) et qui est destiné à introduire une quantité définie d'une solution (R) d'agent réducteur dans les gaz (A) brûlés et une unité (19) de contrôle qui est reliée au dispositif (7) d'addition de manière dosée et qui est destinée à déterminer la quantité à ajouter de manière dosée de la solution (R) d'agent réducteur en fonction des paramètres caractérisant l'état de fonctionnement de l'unité (1) de combustion, les gaz (A) brûlés et/ou le catalyseur (5),
**caractérisé en ce qu'**il est prévu un détecteur (17) de mesure de la concentration de la solution (R) d'agent réducteur, lequel est relié à l'unité (19) de contrôle et **en ce que** l'unité (19) de contrôle est conçue en outre pour adapter la quantité de la solution (R) d'agent réducteur à ajouter de manière dosée à la concentration dont on dispose par le détecteur (17).

6. Dispositif suivant la revendication 5, **caractérisé en ce que** le détecteur (17) est un détecteur de conductivité.

7. Dispositif suivant la revendication 6, **caractérisé en ce que** le détecteur de conductivité comporte deux électrodes pouvant être raccordées à une source de tension et pouvant être immergées dans la solution (R) d'agent réducteur.

8. Dispositif suivant l'une des revendications 5 à 8, **caractérisé en ce que** la solution (R) d'agent réducteur est une solution aqueuse d'urée et le catalyseur (5) est un catalyseur DeNOx.
